# EUROPÄISCHE PATENTSCHRIFT

(11) **EP 4 162 611 B1**
(45) Veröffentlichungstag und Bekanntmachung des Hinweises auf die Patenterteilung: **03.12.2025**
(21) Anmeldenummer: 21729400.8
(22) Anmeldetag: 14.05.2021
(51) Int. Cl.: H04B 5/20, G06K 7/10, H04B 5/45, H04B 5/48, H04B 5/70

(54) **VERFAHREN ZUM KOMMUNIKATIONSAUFBAU ZWISCHEN EINEM TRANSAKTIONSTERMINAL UND EINEM MOBILEN GERÄT UNTER VERMEIDUNG EINES AUTOMATISCHEN STARTS EINER APPLIKATION IN DEM MOBILEN GERÄT**
METHOD FOR ESTABLISHING COOMUNICATION BETWEEN A TRANSACTION TERMINAL AND A MOBILE DEVICE, AVOIDING AUTOMATICALLY STARTING AN APPLICATION IN THE MOBILE DEVICE
PROCÉDÉ D'ÉTABLISSEMENT DE COMMUNICATION ENTRE UN TERMINAL DE TRANSACTION ET UN DISPOSITIF MOBILE, ÉVITANT DE DÉMARRER AUTOMATIQUEMENT UNE APPLICATION DANS LE DISPOSITIF MOBILE

(30) Priorität: 03.06.2020 AT 504782020
(43) Veröffentlichungstag der Anmeldung: 12.04.2023
(73) Patentinhaber: Research Industrial Systems Engineering (RISE) Forschungs-, Entwicklungs- und Grossprojektberatung GmbH, 2320 Schwechat (AT)
(72) Erfinder: PODLIPNIG, Stephan Lukas, 1120 Wien (AT); BACHL, Stefan, 1040 Wien (AT); SEITER, Johannes, 1040 Wien (AT); STROHMAYER, Florian, 1040 Wien (AT)
(74) Vertreter: Schwarz & Partner Patentanwälte GmbH
(86) Internationale Anmeldenummer: PCT/AT2021/060170
(87) Internationale Veröffentlichungsnummer: WO 2021/243386

(56) Entgegenhaltungen:
- US-A1- 2006 094 356

## Beschreibung

Die Erfindung betrifft ein Verfahren zum Kommunikationsaufbau zwischen einem Transaktionsterminal und einem in Kommunikationsreichweite befindlichen mobilen Gerät gemäß dem Oberbegriff von Anspruch 1, wobei der Transaktionsterminal in einem aktiven und einem passiven Kommunikationsmodus kommunizieren kann.

Die Patentschrift US2006/094356 offenbart ein Lesegerät welches zwischen einem Listen-Mode und einem Polling-Mode wechselt um passive und aktive NFC-Geräte zu detektieren.

Dem Fachmann sind die in den Standards ISO 14.443 und ISO 18.092 festgelegten Technologien zum NFC-Kommunikationsaufbau bekannt. NFC steht hierbei für die bekannte Technologie *"Near Field Communication".* Zur Abwicklung einer Transaktion (z.B. eine Bezahlung, eine Türöffnung etc.) mittels kontaktloser NFC-Technologie sind zwei verschiedene Systemteile erforderlich:
- Ein aktiver, lesender Systemteil, welcher sowohl aktiv NFC-Aktivierungssignale aussendet (*"Suche nach einer Karte*") als auch - sobald sich ein entsprechendes, passives Gegenüber (z.B. eine Karte) im Feld befindet - die Information des Gegenübers ausliest und die Transaktion abwickelt. Im Folgenden auch als aktiver Kommunikationsmodus bezeichnet.
- Ein passiver Systemteil, welcher eine Information besitzt, die ausgelesen werden soll (z.B. eine Karte mit einem entsprechenden Schlüssel, der zur Transaktionsabwicklung benötigt wird). Im Folgenden auch als passiver Kommunikationsmodus bezeichnet.

Hinsichtlich der aktiven Rolle von Karten und Endgeräten sind gegenwärtig folgende Ausgangslagen zu finden:
- Einfache Plastikkarten, z.B. Sticker oder Armbänder mit NFC-Chips können etwa mangels eigener Energieversorgung nur als passiver Systemteil dienen. Um diese auszulesen, benötigt es jedenfalls einen aktiven Leser als Gegenüber, welches das NFC-Feld erzeugt.
- Für Endgeräte mit dem Betriebssystem Android (z.B. Smartphones, Tablets u.ä.), welche NFC technologisch unterstützen, ist es möglich, Applikationen zu entwickeln, die wahlweise die aktive Rolle (als Leser) als auch die passive Rolle (eine NFC-Karte simulierend, *"HCE-Modus"*) in der Transaktionsabwicklung wahrnehmen. Es besteht somit große Flexibilität bei der Konzeption und Entwicklung eines Gesamtsystems.
- Endgeräte der Marke Apple, die mit dem Betriebssystem iOS ausgestattet sind (iPhones etc.), können in der Anwendungsentwicklung nur als Leser eingesetzt werden. Die Simulation einer Karte wird für die Anwendungsentwicklung nicht unterstützt. Die Aktivierungssignale werden je nach iOS-Endgerät in fixem Intervall von 300 bis 350 Millisekunden ausgesendet. Die Dauer und Stärke der Aktivierungssignale unterscheiden sich dabei zwischen den einzelnen iPhone-Generationen (z.B. iPhone 8 und iPhone X). Weiters werden ab Generation des iPhone X permanent Aktivierungssignale im Hintergrund ausgesendet (Scannen nach passiven Systemteilen), sobald das Display aktiv ist.

Aus dieser Zusammenstellung ergibt sich, dass es bislang nicht möglich ist, ein und dasselbe Transaktionsterminal mit einer einheitlichen Implementierung für die Transaktionsabwicklung für sowohl Plastikkarten als auch iOS-Endgeräte auszustatten: Plastikkarten können nicht den aktiven, iOS-Endgeräte nicht den passiven Systemteil (in der Anwendungsentwicklung) wahrnehmen. Android-Geräte lassen sich sowohl aktiv wie passiv einsetzen.

Weiters zeigen iOS-Endgeräte das Verhalten, dass bei Empfang von NFC-Aktivierungssignalen eines etwaigen anderen NFC-Geräts zwangsläufig und automatisch am iOS-Endgerät die Apple Pay-Applikation als passiver Systemteil gestartet wird; auch dann, wenn aus Anwendersicht gar keine Apple Pay-Transaktion mit dem iOS-Endgerät durchgeführt werden soll. Die Apple Pay-Applikation wird zudem aus dem Hintergrund gestartet, selbst dann, wenn das Display ausgeschalten ist. Auch aus einer Applikation heraus, die keinen technischen oder fachlichen Anwendungsfall mit NFC-Interaktion benötigt, kann nur mit dem sogenannten *"Apple Pay Suppression Entitlement"* verhindert werden, dass die Apple Pay-Applikation gestartet wird und in weiterer Folge in unerwünschter Weise die gegenwärtig genutzte Applikation überlagert. Das *"Apple Pay Suppression Entitlement"* wird nach Beantragung des Applikationsentwicklers bei Apple und Prüfung durch Apple nach nicht öffentlich ersichtlichen Vergabekriterien erteilt. Das verwendete *"Apple Pay Suppression Entitlement"* erwirkt nur während der Laufzeit der eigenen Applikation, dass die Apple Pay-Applikation nicht gestartet bzw. die eigene Applikation damit überlagert wird. Es ist zudem für den Anwendungsentwickler nicht möglich, das Starten der Apple Pay-Applikation über andere Wege und auch vor bzw. nach der Laufzeit der eigenen Applikation programmatisch zu deaktivieren. Weiters kann auch das Aussenden von NFC-Aktivierungssignalen durch das iOS-Endgerät nicht anwendungsspezifisch beeinflusst (z.B. deaktiviert) werden.

Das vorstehend anhand von iOS-Endgeräten beschriebene Problem der zwangsläufigen und automatischen Aktivierung einer Applikation beim Kommunikationsaufbau dient nur als ein konkretes dem Fachmann die Problematik erläuterndes Beispiel. Diese zwangsläufige und automatische Aktivierung am mobilen Gerät kann aber auch beispielsweise eine Kommunikations-Applikation zum Abrufen von neuen Nachrichten oder eine Wetter-Applikation zum Abrufen aktueller Wetterdaten betreffen.

Der vorliegenden Erfindung liegt die Aufgabe zugrunde, ein Verfahren zu schaffen bei dem ein Kommunikationsaufbau zwischen einem Transaktionsterminal und einem in Kommunikationsreichweite befindlichen mobilen Gerät ermöglicht wird ohne, dass eine Applikation im mobilen Gerät zwangsläufig und automatisch aktiviert wird. Insbesondere soll eine kontaktlose Kommunikation zwischen dem Transaktionsterminal und allen dem Fachmann bekannten NFC aktiven und passiven Systemteilen, also Geräten/Karten und iOS-Endgeräten ermöglicht werden ohne, dass in einem dieser aktiven oder passiven Systemteile eine Applikation zwangsläufig und automatisch gestartet wird.

Erfindungsgemäß wird diese Aufgabe durch ein Verfahren mit den Merkmalen von Anspruch 1 gelöst. Hierbei detektiert der Transaktionsterminal in ersten Zeitbereichen, wenn sein passiver Kommunikationsmodus aktiviert ist, mit einem sensiblen Detektor, ob ein auf der Frequenz von 13 bis 14MHz und insbesondere auf 13,56MHz ausgesendetes Trägersignal des NFC-Aktivierungssignals eines noch außerhalb der Kommunikationsreichweite befindlichen mobilen Geräts detektiert werden kann. Die NFC Kommunikationsreichweite bzw. das sogenannte Nahfeld in dem NFC Geräte kommunizieren und Daten austauschen können beträgt etwa 10 cm. Das Trägersignal des NFC-Aktivierungssignals eines mobilen aktiven NFC Geräts kann von dem sensiblen Detektor des Transaktionsterminals bereits bei einer Entfernung von 0,5 bis 1m zwischen dem Transaktionsterminal und dem mobilen aktiven NFC Gerät detektiert werden. In dieser Entfernung ist die Belastungsmodulation durch das passive NFC Gerät zu schwach und kann vom aktiven NFC Gerät noch nicht demoduliert werden, weshalb eine NFC-Aktivierung und Kopplung außerhalb der Kommunikationsreichweite nicht durchgeführt werden kann. Durch den erfindungsgemäßen Detektor weiß der Transaktionsterminal aber frühzeitig, dass sich ein mobiles aktives NFC Gerät dem Transaktionsterminal nähert und gegebenenfalls sehr bald in die Kommunikationsreichweite kommt. Wenn das NFC Gerät ein iOS-Endgerät ist, dann würde im Zuge des Empfangens des Wake-Up Pakets (WUPA/WUPB, lt. ISO Standard 14.443) auch gleich die Apple Pay-Applikation gestartet werden, was dadurch verhindert wird, dass der Transaktionsterminal schon bevor das iOS-Endgerät in das Nahfeld kommt für die Dauer des dritten Zeitbereichs von einigen Sekunden im passiven Kommunikationsmodus verbleibt. Da das iOS-Endgerät dadurch seinerseits keinen aktiven lesenden Systemteil im Nahfeld detektiert, wird auch die Apple Pay-Applikation nicht gestartet.

Der erfindungsgemäße Wechsel des Transaktionsterminals in den passiven Kommunikationsmodus nach der Früherkennung eines aktiven NFC-Systemteils noch außerhalb der Kommunikationsreichweite verhindert zuverlässig, dass bei Empfang des NFC-Aktivierungssignalen durch iOS-Endgeräte (iPhones etc.) ein Öffnen der Apple Pay-Applikation angestoßen und so eine geplante Transaktion abgebrochen wird. Weiters erlaubt die Früherkennung dem Transaktionsterminal sich jedem beliebigen, nähernden, aktiven Systemteil sofort und selbstständig als passiver Systemteil zur Verfügung zu stellen, um dadurch insbesondere iOS-Endgeräten einen Datenaustausch zu ermöglich.

Wenn das von dem Transaktionsterminal früherkannte mobile aktive NFC Gerät während des dritten Zeitbereichs nicht in das Nahfeld des Transaktionsterminals kommt, dann wird wieder periodisch in aufeinanderfolgenden ersten und zweiten Zeitbereichen der passive und der aktive Kommunikationsmodus des Transaktionsterminals aktiviert, um für die Kommunikation mit den passiven und aktiven Systemteilen der NFC Technologie bereit zu stehen.

Wenn der Transaktionsterminal im zweiten Zeitbereich gerade versucht eine aktive Kommunikation aufzubauen und ein iOS Endgerät besonders schnell in das Nahfeld gebracht wird, dann könnte es passieren, dass das iOS Endgerät von dem Detektor nicht detektiert und daher nichtmehr rechtzeitig in den passiven Kommunikationsmodus des Transaktionsterminals umgeschaltet werden kann. Um diesen Fall zu vermeiden, bei dem neuerlich unerwünscht die Apple Pay-Applikation in dem iOS-Endgerät gestartet werden würde, sendet der Transaktionsterminal in zweiten Zeitbereichen auch gleich einen Applikationsdeaktivierungsbefehl im Zuge einer proprietären Antikollisionsprozedur an gegebenenfalls im Nahfeld befindliche mobile Geräte zur Vermeidung des automatischen Starts der Apple Pay-Applikation aus. Hierdurch ist auch für diesen Spezialfall eines besonders schnell in das Nahfeld bewegten iOS-Endgeräts sichergestellt, dass andere Applikationen abseits von Apple Pay im Rahmen der NFC Kommunikation abgearbeitet werden können.

Auch im Anwendungsfall, wenn sich ein iPhone im Nahbereich eines Transaktionsterminals befindet, der versucht eine aktive Kommunikation aufzubauen, und parallel dazu ein User eine QR-Code Applikation am iPhone startet, um einen QR-Code am Display des Transaktionsterminals abzuscannen, ermöglicht der Transaktionsterminal durch das Aussenden des Applikationsdeaktivierungsbefehls im Zuge einer proprietären Antikollisionsprozedur, dass die Apple Pay-Applikation nicht automatisch startet und die QR-Applikation am iPhone in den Hintergrund zwingt, worauf der User den QR-Code nicht mehr scannen könnte.

Vorteilhafte Ausgestaltungen des erfindungsgemäßen Verfahrens, sowie alternative Ausführungsvarianten werden in weiterer Folge anhand der Figuren näher erläutert.
Figur 1 zeigt den Kommunikationsaufbau zwischen einem Transaktionsterminal und einem passiven mobilen NFC Gerät.
Figur 2 zeigt den Kommunikationsaufbau zwischen dem Transaktionsterminal und einem aktiv/passiv alternierenden mobilen NFC Gerät.
Figur 3 zeigt das Verfahren zum Kommunikationsaufbau gemäß Figur 2.

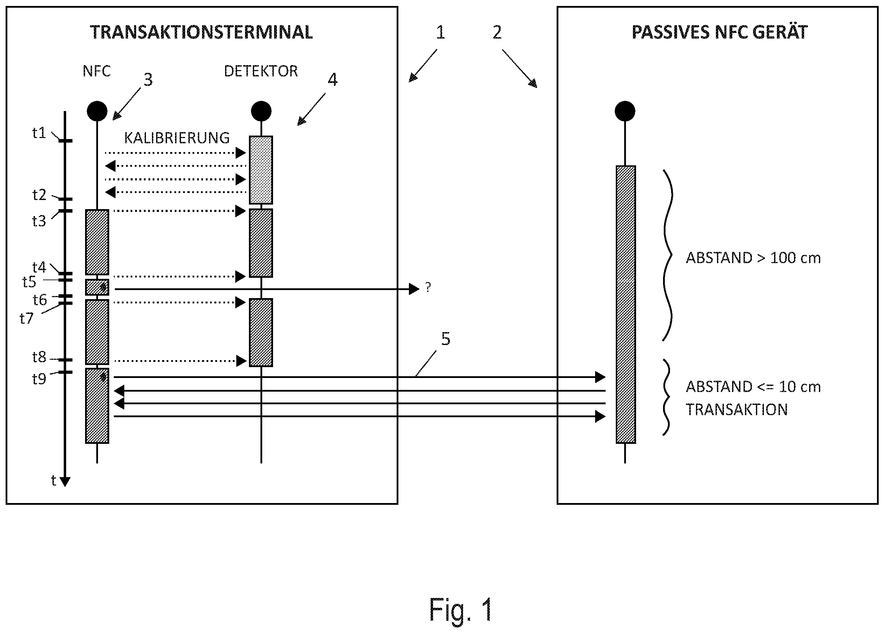

Figur 1 zeigt den Kommunikationsaufbau zwischen einem Transaktionsterminal 1 und einem mobilen passiven NFC Gerät 2, wobei der Transaktionsterminal 1 in einem aktiven und einem passiven Kommunikationsmodus kommunizieren kann. Gemäß diesem Ausführungsbeispiel ist der Transaktionsterminal 1 ein Bezahlterminal in einem Geschäft und das mobile passive NFC Gerät 2 ist eine Kundenkarte, mit der ein Treuebonus zur Verringerung des Kaufpreises eingelöst werden kann und die ausschließlich passiv in dem vom Transaktionsterminal 1 aufgebauten RFID-Feld kommunizieren kann. Der Kommunikationsaufbau genügt hierbei den in den Standards ISO 14.443 und ISO 18.092 festgelegten Bedingungen zum Aufbau einer NFC Kommunikation entsprechend der NFC-Technologie.

Der Transaktionsterminal 1 weist einen NFC IC 3 mit der dem Fachmann bekannten Beschaltung auf. Ein Beispiel für einen solchen NFC IC 3 mit Schaltung ist "NXP PN5180". Der Transaktionsterminal 1 weist weiters einen Detektor 4 auf, der dazu ausgebildet ist, die in vorstehenden Standards festgelegte Trägerfrequenz von 13,56MHz des RFID-Feldes zu detektieren. Der Detektor 4 weist hierfür mehrere Filterstufen und eine Verstärkerstufe auf, die eben gerade diese Trägerfrequenz aus dem Empfangssignal der Antenne des Transaktionsterminals 1 herausfiltert und verstärkt, um ein dem NFC Standard entsprechendes aktives NFC Gerät bereits in eine Entfernung von 50 bis 100cm vom Transaktionsterminal 1 zu detektieren.

In Figur 1 ist eine Zeitachse t dargestellt, anhand der das Verfahren und der zeitliche Ablauf des Kommunikationsaufbaus erläutert wird. Der Transaktionsterminal 1 aktiviert periodisch von einem Zeitpunkt t1 bis zu einem Zeitpunkt t2 einen Kalibrierungsmodus, in dem der Transaktionsterminal 1 das RFID-Feld mit der Trägerfrequenz von 13,56MHz erzeugt, um zu prüfen, ob dieses vom dem Detektor 4 mit der entsprechenden Signalstärke detektiert wird. Als Ergebnis des Kalibrierungsmodus kann eine Veränderung der Verstärkung der Verstärkerstufe oder eine Veränderung der Filtereigenschaft der Filterstufen erfolgen.

In einem auf den Kalibriermodus folgenden Verfahrensschritt wird der passive Kommunikationsmodus in dem Transaktionsterminal 1 für einen ersten Zeitbereich vom Zeitpunkt t3 bis zum Zeitpunkt t4 aktiviert, um eine passive Kommunikation des Transaktionsterminals 1 mit einem gegebenenfalls in NFC Kommunikationsreichweite 5 befindlichen aktiven mobilen NFC Gerät aufzubauen. Die NFC Kommunikationsreichweite 5 bzw. das sogenannte Nahfeld, in dem NFC Geräte kommunizieren und Daten austauschen können, beträgt etwa 10 cm. Gemäß dem Ausführungsbeispiel in Figur 1 beträgt in dem ersten Zeitbereich der Abstand zwischen dem Transaktionsterminal 1 und dem passiven NFC Gerät 2 mehr als 100 cm. Weiters könnte das passive NFC Gerät 2 ja nur über das vom Transaktionsterminal 1 erzeugte RFID-Feld kommunizieren, was der Transaktionsterminal 1 in dem ersten Zeitbereich aber nicht aussendet, weshalb es in dem ersten Zeitbereich zu keinem NFC Kommunikationsaufbau zwischen dem Transaktionsterminal 1 und dem passiven NFC Gerät 2 kommt.

Bei einem darauffolgenden Verfahrensschritt wird der aktive Kommunikationsmodus in dem Transaktionsterminal 1 für einen zweiten Zeitbereich von einem Zeitpunkt t5 bis zu einem Zeitpunkt t6 aktiviert, um eine aktive Kommunikation des Transaktionsterminals 1 mit dem gegebenenfalls in NFC Kommunikationsreichweite 5 befindlichen mobilen passiven NFC Gerät 2 aufzubauen, da in dem ersten Zeitbereich keine Kommunikation mit einem mobilen passivem NFC Gerät 2 aufgebaut wurde. Gemäß dem Ausführungsbeispiel in Figur 1 beträgt in dem zweiten Zeitbereich der Abstand zwischen dem Transaktionsterminal 1 und dem passiven NFC Gerät 2 immer noch mehr als 100 cm, also außerhalb der NFC Kommunikationsreichweite 5. Aus diesem Grund wird das von dem Transaktionsterminal 1 ausgesandte RFID-Feld von dem passiven NFC Gerät 2 entweder gar nicht empfangen oder das gegebenenfalls empfangene RFID-Feld ist zu schwach, um eine Kommunikation durch Belastungsmodulation zu ermöglichen. Aus diesem Grund wird auch in dem zweiten Zeitbereich noch keine Kommunikation zwischen dem Transaktionsterminal 1 und dem passiven NFC Gerät 2 aufgebaut.

Der Transaktionsterminal 1 wechselt daher anschließend für einen weiteren ersten Zeitbereich von einem Zeitpunkt t7 bis zu einem Zeitpunkt t8 erneut in den passiven Kommunikationsmodus. Da das passive NFC Gerät 2 sich auch in diesem erneuten ersten Zeitbereich noch immer außerhalb der NFC Kommunikationsreichweite 5 befindet wechselt der Transaktionsterminal 1 zu einem Zeitpunkt t9 erneut in den aktiven Kommunikationsmodus. Zum Zeitpunkt t9 wurde das passive NFC Gerät 3, also die Kundenkarte, ausreichend nahe an den Transaktionsterminal 1, also den Bezahlterminal, herangehalten, so dass sich die beiden NFC Geräte in NFC Kommunikationsreichweite 5 befinden und die Transaktion des Einlösens des Treuebonuses entsprechend dem NFC Standard abgearbeitet werden kann.

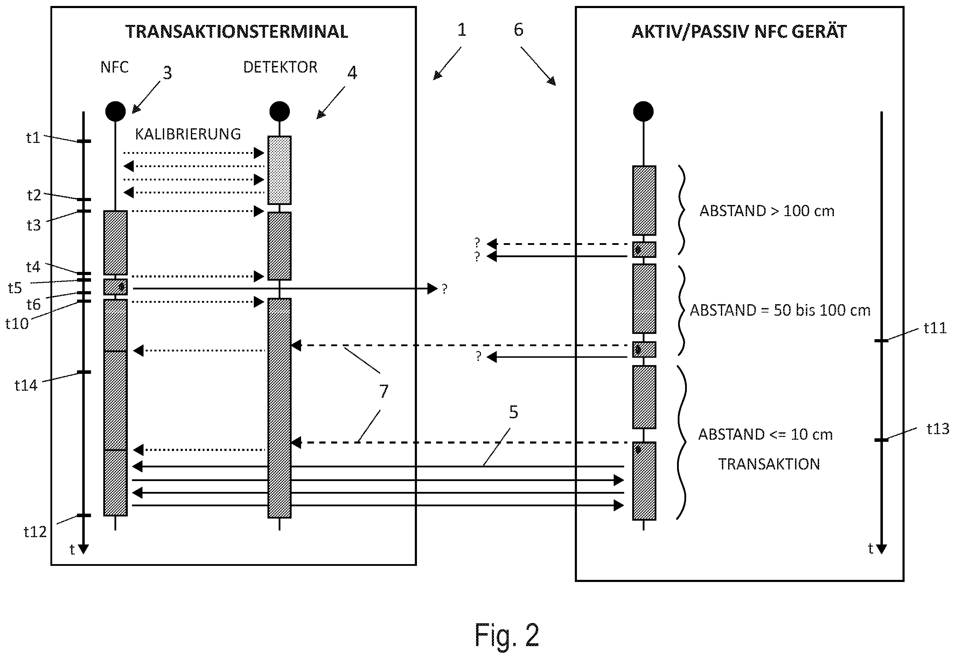

Figur 2 zeigt den Kommunikationsaufbau zwischen dem Transaktionsterminal 1 und einem mobilen aktiv/passiv NFC Gerät 6, wobei das aktiv/passiv NFC Gerät 6 durch ein iPhone der Firma Apple gebildet ist und in einem aktiven und einem passiven Kommunikationsmodus kommunizieren kann. Das iPhone basiert auf dem iOS-Betriebssystem, das bei Detektion eines in seinem aktiven Kommunikationsmodus befindlichen NFC Geräts in NFC Kommunikationsreichweite 5 automatisch in den passiven Kommunikationsmodus schaltet und eine sogenannte Apple Pay-Applikation startet, in der sich das iPhone zum Beispiel wie eine Kreditkarte verhält, um eine Transaktion zum Bezahlen einer Ware mit der Kreditkarte abzuwickeln. Gemäß diesem Ausführungsbeispiel ist der Transaktionsterminal 1 ein Bezahlterminal in einem Geschäft und der Benutzer des iPhones möchte nicht mit der Apple Pay-Applikation bezahlen, sondern einen im Bezahlterminal gespeicherten Treuebonus mit einer Bonuskarten-Applikation auslesen, um diesen im iPhone in der Bonuskarten-Applikation zu speichern. Der Kommunikationsaufbau genügt hierbei dem in den Standards ISO 14.443 und ISO 18.092 festgelegten Bedingungen zum Aufbau einer Kommunikation entsprechend der NFC-Technologie.

Wie bereits zu Figur 1 beschrieben wird zwischen den Zeitpunkten t1 und t2 die Kalibrierung durchgeführt. Der während des ersten Zeitbereichs vom Zeitpunkt t3 bis zum Zeitpunkt t4 in dem Transaktionsterminal 1 aktivierte passive Kommunikationsmodus und der während des zweiten Zeitbereichs vom Zeitpunkt t5 bis zum Zeitpunkt t6 in dem Transaktionsterminal 1 aktivierte aktive Kommunikationsmodus führen zu keinem Kommunikationsaufbau, weil der Abstand zwischen dem Kommunikationsterminal 1 und dem aktiv/passiv NFC Gerät 6 mit mehr als 100cm zu groß ist.

Das aktiv/passiv NFC Gerät 6, das wie der Transaktionsterminal 1 sowohl aktiv als auch passiv kommunizieren kann, aktiviert ebenfalls in ersten Zeitbereichen den passiven Kommunikationsmodus und in zweiten Zeitbereichen den aktiven Kommunikationsmodus, um einen Kommunikationsaufbau zu ermöglichen. Zu einem Zeitpunkt t10, bei dem der Abstand zwischen dem Transaktionsterminal 1 und dem aktiven NFC Gerät 6 50cm bis 100cm, also beispielsweise 60cm beträgt, aktiviert der Transaktionsterminal 1 erneut im ersten Zeitbereich den passiven Kommunikationsmodus. Das aktiv/passiv NFC Gerät 6 aktiviert zu dem Zeitpunkt t11 erneut im zweiten Zeitbereich den aktiven Kommunikationsmodus und sendet das Trägersignal 7 mit einer Trägerfrequenz von 13,56MHz des RFID-Felds aus, welches Trägersignal von dem Detektor 4 des Transaktionsterminals 1, der sich gerade im ersten Zeitbereich in seinem passiven Kommunikationsmodus befindet, detektiert wird. Da der Abstand zwischen dem Transaktionsterminal 1 und dem aktiven NFC Gerät 6 gerade 60 cm und somit größter als die NFC Kommunikationsreichweite 5 von maximal 10 cm ist wird noch keine Kommunikation aufgebaut.

Der Transaktionsterminal 1 ist nunmehr dazu ausgebildet im passiven Kommunikationsmodus des Transaktionsterminals 1 für einen dritten Zeitbereich zu verbleiben, wenn das Trägersignal 7 des aktiv/passiv NFC Geräts 6 detektiert wurde, um eine passive Kommunikation des Transaktionsterminals 1 mit dem in seinem aktiven Kommunikationsmodus befindlichen aktiv/passiv NFC Gerät 6 aufzubauen, wenn das aktiv/passiv NFC Gerät 6 während des dritten Zeitbereichs in die NFC Kommunikationsreichweite 5 kommt. Der im Vergleich zum zweiten Zeitbereich deutlich verlängerte dritte Zeitbereich dauert gemäß dem Ausführungsbeispiel in Figur 2 bis zu dem Zeitpunkt t12, wodurch ermöglicht ist, dass das aktiv/passiv NFC Gerät 6 zu einem Zeitpunkt t13 in einem weiteren zweiten Zeitbereich den aktiven Kommunikationsmodus aktiviert. Zu diesem Zeitpunkt t13 ist der Abstand zwischen dem Transaktionsterminal 1 und dem aktiven NFC Gerät 6 kleiner oder gleich 10 cm, also beispielsweise 6cm. Zu diesem Zeitpunkt t13 befinden sich also der Transaktionsterminal 1 und das aktiv/passiv NFC Gerät 6 innerhalb der NFC Kommunikationsreichweite 5, weshalb eine NFC Kommunikation aufgebaut wird, bei der der Transaktionsterminal 1 im passiven Kommunikationsmodus das RFID-Feld des sich im aktiven Kommunikationsmodus befindlichen aktiven NFC Geräts 6 nutzt.

Hierdurch ist der Vorteil erhalten, dass verhindert wurde, dass der Transaktionsterminal 1 nach Ablauf der ersten Zeitdauer nach dem Zeitpunkt t10, also zu dem Zeitpunkt t14, wieder seinen aktiven Kommunikationsmodus aktiviert hat. Wenn sich das zu diesem Zeitpunkt t14 in seinem passiven Kommunikationsmodus befindliche aktiv/passiv NFC Gerät 6 bereits in der NFC Kommunikationsreichweite 5 zu dem Transaktionsterminal 1 befunden hätte, dann wäre eine NFC Kommunikation aufgebaut worden, bei der der Transaktionsterminal 1 in seinem aktiven Kommunikationsmodus und das aktiv/passiv NFC Gerät 6 in seinem passiven Kommunikationsmodus kommuniziert hätten. In diesem Fall hätte das aktiv/passiv NFC Gerät 6, also das iPhone basierend auf dem iOS-Betriebssystem, zwangsweise und automatisch die Apple Pay-Applikation gestartet. Dies hätte allerdings verhindert, dass der Benutzer des iPhones die Bonuskarten-Applikation starten kann, um den im Transaktionsterminal 1 gespeicherten Treuebonus, der durch einen Zahlen-Sicherheitscode gebildet ist, auszulesen und zu speichern. Das erfindungsgemäße Verfahren zum Kommunikationsaufbau ermöglicht also in Anwendungsfällen, wenn der Transaktionsterminal 1 und das aktiv/passiv NFC Gerät 6 andere als mit der Appel Pay-Applikation durchführbare Transaktionen abarbeiten sollen, den zwangsweise und automatisch durchgeführten Start der Apple Pay-Applikation.

Das erfindungsgemäße Verfahren wurde anhand des Beispiels der Apple Pay-Applikation und dem Aufbau einer NFC Kommunikation erläutert, ist aber keinesfalls darauf eingeschränkt.

Es können darüber hinaus weitere Anwendungsfälle existieren, bei denen ein Transaktionsterminal und ein mobiles Gerät, von denen einer im aktiven und der andere im passiven Kommunikationsmodus kommunizieren, eine Kommunikation aufbauen und in dem mobilen Gerät zwangsweise und automatisch eine Applikation gestartet wird, wodurch andere mögliche Transaktionen oder Kommunikationen zwischen dem Transaktionsterminal und dem mobilen Gerät verhindert werden.

Im weiteren Ablauf des erfindungsgemäßen Verfahrens wird wieder der aktive Kommunikationsmodus in dem Transaktionsterminal 1 für den zweiten Zeitbereich aktiviert, um eine aktive Kommunikation des Transaktionsterminals 1 mit einem gegebenenfalls in NFC Kommunikationsreichweite 5 befindlichen passiven mobilen NFC Gerät 2 aufzubauen, wenn in dem dritten Zeitbereich keine Kommunikation mit dem in seinem aktiven Kommunikationsmodus befindlichen mobilen aktiv/passiv NFC Gerät 6 aufgebaut wurde. Das erfindungsgemäße Detektieren des Trägersignals 7 und darauffolgende verlängern des passiven Kommunikationsmodus in dem Transaktionsterminal 1 von der Dauer des zweiten Zeitbereichs auf die Dauer des dritten Zeitbereichs soll ja für den Transaktionsterminal 1 eine Vorwarnung für ein sich näherndes aktiv/passiv NFC Gerät 6 sein. Wenn sich der Benutzer des aktiv/passiv NFC Geräts 6 aber dem Transaktionsterminal 1 nicht weiter annähert, also das iPhone nicht in die NFC Kommunikationsreichweite 5 des Bezahlterminals bringt, dann wird der allgemeine Wechsel zwischen passivem Kommunikationsmodus während erster Zeitbereiche und aktivem Kommunikationsmodus während zweiter Zeitbereiche wieder durchgeführt.

Es kann erwähnt werden, dass der erste Zeitbereich beispielsweise 360 ms, der zweite Zeitbereich beispielsweise 5 ms und der dritte Zeitbereich beispielsweise 2 Sekunden dauern kann. Je nach Anwendungsfall können diese Zeitbereiche aber auch anders gewählt werden.

Da der Transaktionsterminal 1 und mögliche sich annähernde aktiv/passiv NFC Geräte 6 im Allgemeinen unsynchronisierte erste und zweite Zeitbereiche haben kann es als Spezialfall vorkommen, dass die Zeitbereiche zufällig im Wesentlichen synchronisiert ablaufen und sich sowohl der Transaktionsterminal 1 als auch das aktiv/passiv NFC Gerät 6 gerade immer gleichzeitig in zweiten Zeitbereichen im aktiven Kommunikationsmodus sind. In diesem Fall kann der Detektor 4 das Trägersignal 7 des sich annähernden aktiv/passiv NFC Geräts 6 nicht detektieren, da der Detektor 4 immer nur im passiven Kommunikationsmodus des Transaktionsterminals 1 das Trägersignal 7 des aktiv/passiv NFC Geräts 6 detektieren kann. In diesem Spezialfall könnte der zwangsweise und automatische Start des Apple Pay-Applikation nicht durch Verlängerung des passiven Kommunikationsmodus auf die Dauer des dritten Zeitbereichs verhindert werden. Ebenso wäre es möglich, dass das aktiv/passiv NFC Gerät 6 so schnell an den Transaktionsterminal 1 angenähert wird, dass es sich in NFC Kommunikationsreichweite 5 befindet bevor das Trägersignal 7 detektiert wurde.

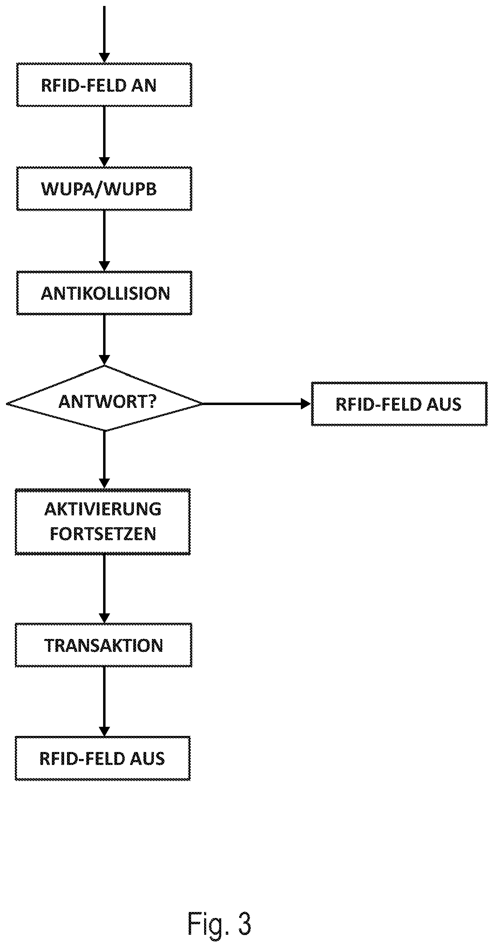

Für diese zwei Spezialfälle weist das erfindungsgemäße Verfahren einen weiteren Verfahrensschritt auf, der den zwangsweisen und automatischen Start der Apple Pay-Applikation verhindert. Der Transaktionsterminal 1 ist zum Aussenden eines Applikationsdeaktivierungsbefehls in dem zweiten Zeitbereich unmittelbar beim Aufbau der aktiven Kommunikation des Transaktionsterminals 1 mit dem in der NFC Kommunikationsreichweite 5 in seinem passiven Kommunikationsmodus befindlichen aktiv/passiv NFC Gerät ausgebildet. Der ISO 14.443-4 Standard definiert in dem Teil 6.2.3. READY State Description, dass unmittelbar nach einem WUPA/WUPB Befehl zum Aufwecken des in seinem passiven Kommunikationsmodus befindlichen aktiv/passiv NFC Gerät 6 ein proprietäres Antikollisionsverfahren abgearbeitet werden kann. Figur 3 zeigt diesen allgemeinen NFC-Kommunikationsaufbau bis zum Datenaustausch. Im Zuge dieses proprietären Antikollisionsverfahrens kann ein bestimmter Code als Applikationsdeaktivierungsbefehls vom Transaktionsterminal 1 an das aktiv/passiv NFC Gerät 6 gesendet werden, der den zwangsweisen und automatischen Start der Apple Pay-Applikation verhindert, wenn das aktiv/passiv NFC Gerät 6 den Applikationsdeaktivierungsbefehl kennt und entsprechend verarbeitet. Hierdurch ist der Vorteil erhalten, dass auch für die beiden vorstehend beschriebenen Spezialfälle der für manche Anwendungsfälle unerwünschte automatische Start der Apple Pay-Applikation verhindert wird.

## Patentansprüche

1. Verfahren zum Kommunikationsaufbau zwischen einem Transaktionsterminal (1) und einem in einer Kommunikationsreichweite (5) von etwa 10cm zum Austausch von Daten befindlichen mobilen Gerät (2; 6), wobei der Transaktionsterminal (1) in einem aktiven und einem passiven Kommunikationsmodus kommunizieren kann und wobei folgende Verfahrensschritte durchgeführt werden:
• Aktivieren des passiven Kommunikationsmodus in dem Transaktionsterminal (1) für einen ersten Zeitbereich (t3-t4; t7-t8) einer vorab gewählten Dauer, um eine passive Kommunikation des Transaktionsterminals (1) mit einem gegebenenfalls in Kommunikationsreichweite (5) befindlichen mobilen aktiven Gerät (6) aufzubauen;
• Aktivieren des aktiven Kommunikationsmodus in dem Transaktionsterminal (1) für einen zweiten Zeitbereich (t5-t6) einer vorab gewählten Dauer, um eine aktive Kommunikation des Transaktionsterminals (1) mit einem gegebenenfalls in Kommunikationsreichweite (5) befindlichen passiven mobilen Gerät (2) aufzubauen, wenn in dem ersten Zeitbereich (t3-t4; t7-t8) keine Kommunikation mit einem mobilen aktiven Gerät (6) aufgebaut wurde, wobei periodisch in aufeinanderfolgenden ersten und zweiten Zeitbereichen der passive und der aktive Kommunikationsmodus des Transaktionsterminals aktiviert wird, um die Kommunikation mit dem mobilen Gerät (2; 6) in dem aktiven oder passiven Kommunikationsmodus aufzubauen;
**gekennzeichnet durch** folgende weiter Verfahrensschritte:
• Filtern mit mehreren Filterstufen und Verstärken mit einer Verstärkerstufe eines Detektors (4), um aus einem Empfangssignal der Antenne des Transaktionsterminals (1) ein von einem außerhalb der Kommunikationsreichweite (5) in einer Entfernung von 50 bis 100cm vom Transaktionsterminal (1) befindlichen mobilen aktiven Gerät (6), das durch ein dem NFC Standard entsprechendes aktives NFC Gerät gebildet ist, abgegebenes Trägersignal (7) mit einer Trägerfrequenz von 13,56 MHz zu detektieren;
• Detektieren des Trägersignals (7) des außerhalb der Kommunikationsreichweite (5) befindlichen mobilen aktiven Geräts (6) während des ersten Zeitbereichs (t3-t4; t7-t8);
• Verbeiben im passiven Kommunikationsmodus des Transaktionsterminals (1) für einen dritten Zeitbereich (t10-t12) einer vorab gewählten Dauer, wenn das Trägersignal (7) des mobilen aktiven Geräts (6) im ersten Zeitbereich (t3-t4; t7-t8) detektiert wurde, um eine passive Kommunikation des Transaktionsterminals (1) mit dem mobilen aktiven Gerät (6) aufzubauen, wenn das mobile aktive Gerät (6) während des dritten Zeitbereichs (t10-t12) in Kommunikationsreichweite (5) kommt.

2. Verfahren gemäß Anspruch 1, **dadurch gekennzeichnet, dass** folgende weiter Verfahrensschritte durchgeführt werden:
• Aktivieren des aktiven Kommunikationsmodus in dem Transaktionsterminal (1) für den zweiten Zeitbereich (t5-t6), um eine aktive Kommunikation des Transaktionsterminals (1) mit einem gegebenenfalls in Kommunikationsreichweite (5) befindlichen mobilen passiven Gerät (2) aufzubauen, wenn in dem dritten Zeitbereich (t10-t12) keine Kommunikation mit dem mobilen aktiven Gerät (6) aufgebaut wurde.

3. Verfahren gemäß einem der Ansprüche 1 oder 2, **dadurch gekennzeichnet, dass** folgende weiter Verfahrensschritte durchgeführt werden:
• Aussenden eines Applikationsdeaktivierungsbefehls durch den Transaktionsterminal (1) unmittelbar beim Aufbau der aktiven Kommunikation des Transaktionsterminals (1) mit einem in der Kommunikationsreichweite befindlichen mobilen passiven Gerät (6).

4. Verfahren gemäß einem der Ansprüche 1 bis 3, **dadurch gekennzeichnet, dass** der Kommunikationsaufbau je nach Zeitbereich gemäß den Standards ISO 14.443 und ISO 18.092 durchgeführt wird.

5. Verfahren gemäß Anspruch 3, **dadurch gekennzeichnet, dass** der Applikationsdeaktivierungsbefehl im Zuge einer proprietären Antikollisionsprozedur an das mobile passive Gerät (6) zur Vermeidung des automatischen Starts einer Applikation in dem mobilen passiven Gerät (6) ausgesendet wird.

## Claims

1. Method for establishing communication between a transaction terminal (1) and a mobile device (2; 6) located within a communication range (5) of approximately 10 cm for the exchange of data, wherein the transaction terminal (1) can communicate in an active and a passive communication mode and wherein the following method steps are performed:
• Activating the passive communication mode in the transaction terminal (1) for a first time interval (t3-t4; t7-t8) of a preselected duration in order to establish passive communication between the transaction terminal (1) and a mobile active device (6) that may be within the communication range (5);
• Activating the active communication mode in the transaction terminal (1) for a second time period (t5-t6) of a preselected duration in order to establish active communication between the transaction terminal (1) and a passive mobile device (2) that may be within communication range (5) if no communication with a mobile active device (6) was established in the first time period (t3-t4; t7-t8), no communication with a mobile active device (6) has been established, wherein the passive and active communication modes of the transaction terminal are activated periodically in successive first and second time periods in order to establish communication with the mobile device (2; 6) in the active or passive communication mode;
**characterized by** the following further method steps:
• filtering with multiple filter stages and amplifying with an amplifier stage of a detector (4) in order to detect, from a received signal from the antenna of the transaction terminal (1), a carrier signal (7) with a carrier frequency of 13.56 MHz emitted by an active NFC device (6) that complies with the NFC standard, located outside the communication range (5) at a distance of 50 to 100 cm from the transaction terminal (1); which is formed by an active NFC device corresponding to the NFC standard, with a carrier frequency of 13.56 MHz;
• detecting the carrier signal (7) of the mobile active device (6) located outside the communication range (5) during the first time interval (t3-t4; t7-t8);
• Remaining in the passive communication mode of the transaction terminal (1) for a third time interval (t10-t12) of a preselected duration when the carrier signal (7) of the mobile active device (6) was detected in the first time interval (t3-t4; t7-t8) in order to establish passive communication between the transaction terminal (1) and the mobile active device (6) when the mobile active device (6) comes within communication range (5) during the third time interval (t10-t12).

2. Method according to claim 1, **characterized in that** the following further method steps are performed:
• Activating the active communication mode in the transaction terminal (1) for the second time range (t5-t6) in order to establish active communication between the transaction terminal (1) and a mobile passive device (2) that may be within communication range (5) if no communication with the mobile active device (6) was established in the third time range (t10-t12).

3. Method according to one of claims 1 or 2, **characterized in that** the following further method steps are performed:
• Transmission of an application deactivation command by the transaction terminal (1) immediately upon establishment of active communication between the transaction terminal (1) and a mobile passive device (6) within the communication range.

4. Method according to one of claims 1 to 3, **characterized in that** the communication is established according to the time range in accordance with the ISO 14.443 and ISO 18.092 standards.

5. Method according to claim 3, **characterized in that** the application deactivation command is sent to the mobile passive device (6) as part of a proprietary anti-collision procedure to prevent the automatic start of an application in the mobile passive device (6).

## Revendications

1. Procédé d'établissement d'une communication entre un terminal de transaction (1) et un appareil mobile (2; 6) situé à portée de communication (5) d'environ 10 cm pour l'échange de données, dans lequel le terminal de transaction (1) peut communiquer en mode de communication actif et en mode de communication passif et dans lequel les étapes du procédé suivantes sont réalisées:
• activer le mode de communication passif dans le terminal de transaction (1) pour un premier domaine temporel (t3-t4; t7-t8) d'une durée choisie au préalable afin d'établir une communication passive du terminal de transaction (1) avec un appareil mobile actif (6) éventuellement situé à portée de communication (5);
• activer le mode de communication actif dans le terminal de transaction (1) pour un deuxième domaine temporel (t5-t6) d'une durée choisie au préalable afin d'établir une communication active du terminal de transaction (1) avec un appareil mobile passif (2) éventuellement situé à portée de communication (5) lorsqu'aucune communication avec un appareil mobile actif (6) n'a été établie dans le premier domaine temporel (t3-t4; t7-t8), les modes de communication passif et actif du terminal de transaction étant périodiquement activés dans les premier et deuxième domaines temporels successives afin d'établir la communication avec l'appareil mobile (2; 6) dans le mode de communication actif ou passif;
**caractérisé par** les étapes du procédé supplémentaires suivantes:
• filtrer en plusieurs étapes de filtration et amplifier à l'aide d'un étage amplificateur d'un détecteur (4) afin de détecter, à partir d'un signal de réception de l'antenne du terminal de transaction (1), un signal porteur (7) ayant une fréquence porteuse de 13,56 MHz et émis par un appareil mobile actif (6) situé hors de la portée de communication (5) à une distance de 50 à 100 cm du terminal de transaction (1) et constitué d'un appareil NFC actif conforme à la norme NFC;
• détecter le signal porteur (7) de l'appareil mobile actif (6) situé hors de la portée de communication (5) pendant le premier domaine temporel (t3-t4; t7-t8);
• rester en mode de communication passive du terminal de transaction (1) pour un troisième domaine temporel (t10-t12) d'une durée choisie au préalable lorsque le signal porteur (7) de l'appareil mobile actif (6) a été détecté dans le premier domaine temporel (t3-t4; t7-t8) afin d'établir une communication passive du terminal de transaction (1) avec l'appareil mobile actif (6) lorsque l'appareil mobile actif (6) arrive dans la portée de communication (5) pendant le troisième domaine temporel (t10-t12).

2. Procédé selon la revendication 1, **caractérisé en ce que** les étapes du procédé supplémentaires suivantes sont réalisées:
• activer le mode de communication active dans le terminal de transaction (1) pour le deuxième domaine temporel (t5-t6) afin d'établir une communication active du terminal de transaction (1) avec un appareil mobile passif (2) éventuellement situé à portée de communication (5) lorsqu'aucune communication avec l'appareil mobile actif (6) n'a été établie dans le troisième domaine temporel (t10-t12).

3. Procédé selon l'une des revendications 1 ou 2, **caractérisé en ce que** les étapes du procédé supplémentaires suivantes sont réalisées:
• émettre une commande de désactivation d'application par le terminal de transaction (1) immédiatement après l'établissement de la communication active du terminal de transaction (1) avec un appareil mobile passif (6) situé à portée de communication.

4. Procédé selon l'une des revendications 1 à 3, **caractérisé en ce que** l'établissement de la communication est effectué conformément aux normes ISO 14.443 et ISO 18.092, selon le domaine temporel.

5. Procédé selon la revendication 3, **caractérisé en ce que** la commande de désactivation de l'application est envoyée à l'appareil mobile passif (6) dans le cadre d'une procédure anticollision propriétaire pour empêcher le lancement automatique d'une application dans l'appareil mobile passif (6).
